# EUROPEAN PATENT SPECIFICATION

(11) **EP 3 406 523 B1**
(45) Date of publication and mention of the grant of the patent: **18.11.2020**
(21) Application number: 17173072.4
(22) Date of filing: 26.05.2017
(51) Int. Cl.: B64D 11/06, B60N 2/015

(54) **SEAT AND ADAPTOR PLATE THEREFOR**
SITZ UND ADAPTERPLATTE DAFÜR
SIÈGE ET PLAQUE ADAPTATRICE ASSOCIÉE

(43) Date of publication of application: 28.11.2018
(73) Proprietor: ETH Zürich, 8092 Zürich (CH); Staub, Theodor, 8841 Gross (CH)
(72) Inventor: SCHACHER, Benjamin, 6005 Luzern (CH); GROSJEAN, Valentin, 8051 Zürich (CH); WÜTHRICH, Moritz, 8055 Zürich (CH); HÄUSERMANN, David, 5426 Lengnau (CH); EGGLER, Theresa, 8008 Zürich (CH); WALKER, Andreas, 6461 Isenthal (CH); GEROLD, Manuel, 8008 Zürich (CH); PAYSEN-PETERSEN, Roman, 8723 Rufi (CH); KÜNNECKE, Annina, 4410 Liestal (CH); STAUB, Theo, 8841 Gross (CH); TESTONII, Oleg, 8051 Zürich (CH); KARL, Christoph, 8037 Zürich (CH); ERMANNI, Paolo, 8053 Zürich (CH)
(74) Representative: Frischknecht, Harry Ralph

(56) References cited:
- EP-A1- 2 965 990
- WO-A1-2016/012869
- DE-U1- 29 911 783
- GB-A- 2 098 935
- GB-A- 2 491 552
- US-A1- 2015 008 714
- US-A1- 2015 075 933
- US-A1- 2015 145 292
- US-B2- 8 152 101

## Description

### TECHNICAL FIELD

The present invention relates generally to a removable seat for an airplane with a suitcase shell which seat is convertible into a suitcase. Moreover, the present invention relates to an adaptor plate for fastening said seat in a floor of an airplane.

### PRIOR ART

Airplane seats are known. Commonly, airplane seats are fixedly (not removably) attached to the floor of an airplane. It is thus commonly not intended that they are removable and carried by the passenger. Accordingly, all seats are constantly installed in the vessel, even the empty ones. This has the drawback that additional weight has to be transported.

EP 2 705 984 A1 and US 2015 145292 A teach that parts of the airplane seat may be removable and may be used as carry-on luggage.

EP 2 759 447 A2 teaches a luggage item which may be attached to a fixed airplane seat.

WO 2016/012869 A1 discloses an airliner seat comprising a backrest and a seat attached pivotally to the backrest so as to extent forwardly from the backrest in use. After the flight, the seat can be folded in a compact and portable form.

GB 2491552 A discloses a multi-purpose apparatus comprising a backrest and a seat that is connected to the backrest via an axis around which the seat can move relative to the backrest. The seat is realisably lockable in a position, wherein the apparatus is folded into the size of a suitcase.

GB 2 098 935 A discloses a collapsible wheelchair for a disabled person comprising a base assembly, a support structure for a seat, and a seat with a back-rest.

### SUMMARY OF THE INVENTION

It is an object of the present invention to provide an improved removable passenger seat for an airplane.

This object is achieved by the seat according to claim 1. According thereto, in a first aspect of the present invention, a removable (or carry-on) passenger seat for an airplane is suggested, said seat comprising a seat frame, a suitcase shell for stowing luggage. The suitcase shell is therefore to be considered a replacement for a typical carry-on piece of luggage. Said suitcase shell is arranged in said seat frame. Furthermore, the seat comprises a collapsible backrest. The above-mentioned object is achieved in that said suitcase shell is arranged in a swiveling manner such that said seat may be converted from a seat configuration into a more compact suitcase configuration and back by collapsing said backrest and by swiveling said suitcase shell from a seat positon to a suitcase position and back.

The seat is therefore mobile, *i*.*e*. easy to attach and detach from the vessel by hand and/or foot, *e.g.* without the need for any tools. The removable seat may be attached, used, detached and carried by the average passenger. The seat may also be referred to as a carry-on seat; this in analogy to carry-on luggage in commercial air travel.

The average passenger may perform the mounting/dismounting steps alone, without any help. Accordingly, the securing or anchoring means for fixing the seat to the transport vessel are operable with a straightforward manipulation executed by hand or foot.

The term "*seat configuration*" refers to a configuration in which the seat is providing the functions of an average seat including a seating surface and a backrest. This seat configuration is achieved by bringing the backrest into fully extended and substantially vertical position and by rotating or swiveling the suitcase shell into said "*seat position*", meaning that the seating surface is oriented substantially horizontal for supporting the seated passenger. The term "*suitcase configuration*" refers to a configuration in which the seat is made more compact, or is collapsed, basically into a preferably substantially cuboid shape for increasing mobility of the seat. The suitcase configuration is achieved by collapsing the backrest, *e.g.* by folding or pushing-in the backrest into or onto the seat frame, and by rotating or swiveling the suitcase shell into said "*suitcase position*", in which the seating surface is no longer horizontally oriented and the seat becomes more compact. The term "*seat frame*" refers to a sturdy and rigid construction for supporting the seating surface and the backrest including the passenger and, preferably, further elements such as armrests. The term "*suitcase shell*" refers to a case or container with reasonably sized stowing volume in the range of, for example, from 0.01 to 0.1 cubic meters. The term "*collapsible*" describes a property of the designated element, namely, that said element may be brought into a more compact configuration and back into its extended position.

Generally, airplane seats are characterized in that they are light, compact and provided with securing or anchoring means for safe attachments to a part, preferably a floor part, of the passenger vessel. The seat according to invention may be constructed from light materials as known in the field of seat and suitcase making such as light metals, plastics and/or carbon. The seat may be designed for long seating times, *e.g.* in the case of a long-haul flight.

The first aspect of the present invention is therefore based on the understanding that a suitcase shell may be provided in a removable or mobile seat frame, wherein the suitcase shell is rotatable to bring the seat from a seat configuration into a more compact suitcase configuration.

In some embodiments, said suitcase shell is a rigid shell and has a substantially cuboidal shape. It may be made from a light material, such as aluminium or plastics, as commonly known from the suitcase industry. Preferably, a front wall of the suitcase shell in seat position is rounded in the lower section.

In some embodiment, a volume of the suitcase shell is at least 0.01 cubic meters. Preferably the volume is selected from a range of from 0.01 cubic meters to 0.1 cubic meters, preferably 0.025 cubic meters to 0.075 cubic meters.

In some embodiments, said suitcase shell comprises an access opening for easy access of the stowing volume in the suitcase shell. The access opening extends, preferably, over an entire face of the suitcase shell. Thereby, fast and convenient packing and unpacking is ensured. Preferably, the access opening is arranged directly under the seating surface.

Preferably, said suitcase shell is a single piece element. It may be a deep drawn or extruded element. It may be from aluminium, polycarbonate, carbon or another sheet material known from common suitcase constructions.

Preferably, said access opening is covered by means of a cover plate. The cover plate may be made from the same material as the suitcase shell.

Preferably, said cover plate serves with its outside surface as seating surface of said seat. Preferably, said seating surface is cushioned and/or ergonomically shaped.

In some embodiments, a swiveling angle of said suitcase shell between said seat position in the seat configuration of the seat and said suitcase position in said suitcase configuration of the seat is in a range of from 70 to 100 degrees, preferably of substantially 90 degrees. The rotation direction is preferably such that the seating surface is rotated forward, *i.e.* away from the backrest.

In some embodiments, an axis of rotation of said suitcase shell extends substantially centrally through said suitcase shell. The axis of rotation is preferably oriented horizontally or, in other words, parallel to the seating surface.

In some embodiments, said backrest comprises two or more sections that are attached to one another in a swiveling manner. The attachment may be achieved by hinges or the like.

One or more return spring members may be used to assist the passenger with the movement of some or all of the moveable parts of the seat. Especially, a gas strut (see below) may be arranged in the seat frame, preferably in the suitcase shell, for supporting the rotation movement of the suitcase shell. This is particularly convenient if the suitcase shell is filled with heavy objects.

In some preferred embodiments, said seat is configured such that said suitcase shell is releasably lockable in said seat position and/or in said suitcase position. Preferably, said seat further comprises an interlocking handle for releasing said suitcase shell if it is in a locked state.

Preferably said interlocking handle is integrated into a back wall of said suitcase shell. The back wall is the wall of the suitcase shell that is substantially parallel and closest to the backrest when the seat is in seat position. The handle may be a push, pull, rotate, or shift element such as, for example, a button or a lever.

Preferably, said seat comprises one or more securing elements which are arranged and configured such that said interlocking handle is ineffective or blocked if said backrest is in an extended position. This avoids accidental actuation of the interlocking handle while the seat is in seat configuration. The securing element may be an element that is operatively connected to the backrest and, in case of extended backrest, is arranged in a position where it renders the handle ineffective or blocks the handles release movement. In case of a partly or fully collapsed backrest, said at least one securing element is moved out of said position to release the interlocking handle. IN some embodiment, said securing element may be a wire attached to the backrest or bottom hinge and extending to the interlocking handle.

In some embodiments, said seat comprises armrests, said armrests being preferably attached to said seat frame in a hinged manner for swiveling them between a seat position (swivelled, pushed, or folded out) and a suitcase position (swivelled, pushed, or folded in).

In some embodiments, the seat further comprises a telescopic handle, said telescopic handle being preferably attached to a bottom plate of said suitcase shell, said bottom plate being arranged opposite said cover plate. Generally, the telescopic handle is arranged such that, in suitcase configuration, the extended handle is oriented substantially vertically. Any known telescopic handle may be used. The handle may, however, also be integrated or attached to or may be part of the backrest or the seat frame.

In some embodiments, said seat frame comprises front legs and back legs. The legs may be arranged in the corner region of the seat. Preferably, wheels are attached to said back legs such that said seat in said suitcase configuration is an easy-to-tow wheeled suitcase. Preferably, said handle is oriented, when extended, parallel to the back legs and is arranged preferably substantially in a plane defined by the two back legs. It is also conceivable that all legs are provided with wheels, preferably casters, such as to provide a spinner function.

In some embodiments, one moveable latch is arranged at or in some or all of the legs, preferably only in each front leg, for attaching said seat to a floor section of an airplane, in particular an adaptor plate according to invention. Said latch may be considered as part of the securing or anchoring means.

Preferably, said latch is extendable from a retracted position into an extended position such as to protrude downward beyond said respective leg. This allows an easy locking of the latch in a corresponding locking element arranged in the floor to which the seat shall be secured to, whilst disturbing the walking passenger who tows the seat is avoided.

Preferably, said seat frame comprises a foot traverse that connects said legs, preferably said front legs. This further improves stability of the seat. Said foot traverse may accommodate an actuation element. Upon operation of said actuation element, said latches are extended. The actuation element may be a push-in flap which may easily be operated by foot. This has the advantage that the passenger may operate the actuation element without using a hand. Of course, a different latch movement mechanism may be used. The flap and the foot board (see below) may be arranged close to one another.

In some embodiments, said collapsible backrest is attached to said suitcase shell in a hinged manner. This allows, in particular in combination with a collapsible backrest with several sections that may be rotated with respect to one another, a more compact suitcase configuration. Preferably, said backrest is collapsible onto said suitcase shell, in particular onto the seating surface of the seat.

In a further aspect, the present invention relates to an adaptor plate. According thereto, an adaptor plate for integration into an airplane is suggested, the adaptor plate comprising at least one, preferably two, wheel retainer for retaining a wheel of a convertible seat, at least one latch slot for insertion and locking of latch attached to said seat.

Preferably, the adaptor plate comprises a foot board assembly with a moveable foot board, wherein, by movement of the foot board, said wheel retainer may be actuated and/or a locking mechanism that locks said at least one latch may be released. Most preferably, said foot board is arranged to be shifted by foot. The passenger may step on the board and push or pull it, preferably in the forward direction. Preferably, the foot board is accommodated in operative connection with a return spring element, wherein the return spring element is configured and arranged for returning the foot board into its original position after it has been dislocated by the passenger. Preferably, the foot board may be coated with an anti-slip layer and/or structure. Preferably, the foot board section open to the outside for receiving the foot of the passenger is 10 to 30 centimeters wide and 10 to 30 centimeters long.

Preferably, two wheel retainers and two latch slots are arranged such that they are positioned in corners of a rectangle or square. Side lengths of the rectangle or square may range from 45 to 80 centimeters. Preferably, the foot board is arranged between the two latch slots, most preferably arranged on the outside of said rectangle or square.

Preferably, the foot board interacts, upon movement, with two rotatably mounted, L-shaped levers, each of the levers being connected to a Bowden cable that activates one of the wheel retainers.

Preferably, the foot board is integrated into the adapter plate at a position such that it is arranged just in front of the seat once the latter is fastened to the adaptor plate.

Preferably, the adapter plate comprises a latch catcher mechanism configured and arranged for catching and releasably fixing a latch inserted into said at least one latch slot. Preferably the adapter plate comprises two latch slots, wherein a latch catcher mechanism is provided for each latch slot. The latch catcher mechanism may comprise a biased bolt with an inclined surface such that the latch inserted into the latch slot automatically pushes the bolt back against a return spring element. The latch catcher mechanism may be released by the movement of the foot board, *i.e.* simultaneously with the one or more wheel retainers. The releasing operation may also involve Bowden cables operatively connected to the foot board. Preferably, the Bowden cable(s) for the wheel retainer(s) and the Bowden cable(s) for the latch catcher mechanism are attached to a rotatable lever. Preferably, the rotatable lever is a two-arm lever, wherein the Bowden cable(s) for the wheel retainer(s) are attached to one arm and the Bowden cable(s) for the latch catcher mechanism are attached to the other arm. Preferably, each arm of the two-arm lever carries one Bowden cable. One or more such two-arm levers may be comprised by the adaptor plate. Preferably, the Bowden cable(s) for the wheel retainer(s) extend substantially at right angles to the Bowden cable(s) for the latch catcher mechanism.

Preferably, the locking state of the latch catcher mechanism is monitored, *e.g.* by means of a sensor such as a feeler.

Preferably, there is a central locking system integrated into said adapter plate for centrally locking the latch catcher mechanism. Preferably, said central locking system uses a central locking cable for transmitting locking movements to the latch catcher mechanism. Preferably, said locking cable runs substantially at right angles to the at least one Bowden cable arranged for activation of that wheel retainer.

In some preferred embodiments, the at least one wheel retainer may be particularly suited for counteracting the load in z direction, *i*.*e*. at right angles to the top surface of the adaptor plate. Preferably, each wheel retainer contacts the wheel or wheel housing, preferably above an axle of the respective wheel.

Preferably, the wheel retainer contacts the structure that is accommodating the wheel and not directly the wheel such that the wheel(s) is/are not additionally loaded forces due to the securing of the seat on the adaptor plate.

Preferably, each wheel retainer comprises a rotatable hook-like wheel retainer element for accommodating one wheel. Preferably, said hook-like wheel retainer element may be rotated into a respective recess in the adapter plate into a collapsed state. Preferably, in the collapsed state, the top surface of the adapter plate is substantially flush. Preferably, the hook-like retainer element is oriented such that it is, in extended position, open towards said latch slot. Preferably, the wheel retainer elements may be rotated towards the respective latch slot into the adapter plate.

Accordingly, in some embodiments, each wheel retainer preferably comprises a hook-like wheel retainer element for accommodating the wheel, wherein, preferably, said wheel retainer element can be rotated from a collapsed position and an extended position. In the collapsed position, the wheel retainer element is received in a wheel retainer element recess such that a top surface of the adapter plate is substantially planar and continuous. The term "*continuous*" is to be understood, that the retainer element substantially closes the retainer element recess such that only minimal recesses remain. This lowers the risk that something entangles with a recess if no seat is installed. In the extended position, said wheel retainer element may receive and accommodate said wheel whilst securing the seat, preferably by contacting the seat frame structure around the wheel. Thereby, forces acting perpendicularly to said top surface of the adaptor plate may be absorbed.

This kind of securing allows for fast installation and removal of the seat, without the need for any tools. Moreover, no extended recesses are present in the adaptor plate if deactivated, e.g. if not used. Only the latch slots, minor slits around the wheel retainer element as residues of the wheel retainer element, and some screw holes (if any) may be present. Accordingly, a tripping risk or entanglement risk is lowered.

Preferably, the central locking system is configured for locking the rotation of the wheel retainer element(s). In some embodiments, the locking may be possible in both position of the wheel retainer element(s), *i.e.* in the extended position (avoiding unauthorized removal of the seat) and in the collapse position (avoiding unauthorized manipulation of the adaptor plate). The central locking system may block the latch bolts that lock the latches directly. The Bowden cable connecting the latch bolts with the foot board are locked by locking the latch bolts, which, in turn locks the foot board. Accordingly, an unused adaptor plate with wheel retainer elements in collapsed position has a blocked foot board, consequently, the wheel retainer elements may only be released into the extended position once the central locking system is released.

Preferably, said at least one latch slot is oriented along the flight direction.

In yet another aspect, the present invention relates to a seating system. The combination of the seat according to invention and the adaptor plate according to invention results in a seating system that provides high security, a comfortably sized packing volume in the suitcase shell, and a good mobility of the seat in suitcase configuration for easy handling.

Of course, the seat, the adaptor plate, and the seating system as described herein may also integrated in another vessel such as, for example, a high-velocity train or the like.

### BRIEF DESCRIPTION OF THE DRAWINGS

Preferred embodiments of the invention are described in the following with reference to the drawings, which are for the purpose of illustrating the present preferred embodiments of the invention and not for the purpose of limiting the same. In the drawings,
- Fig. 1: shows a perspective front side view of an embodiment of the convertible airplane seat according to the invention in a seat configuration;
- Fig. 2: shows a perspective backside view of the airplane seat according to Fig. 1;
- Fig. 3: shows a detail of Fig. 1 with a partly folded-in backrest;
- Fig. 4: shows in a perspective view the airplane seat according to Fig. 1 with a collapsed backrest;
- Fig. 5: shows the airplane seat according to Fig. 4 from a different viewing angle;
- Fig. 6: shows a detail of Figs. 4 and 5;
- Fig. 7: shows a suitcase shell of the airplane seat according to the previous figures with a closed cover plate;
- Fig. 8: shows the suitcase shell from another viewing angle;
- Fig. 9: shows the suitcase shell according to Fig. 7 without the cover plate, wherein a lateral plate is visible;
- Fig. 10: shows a seat frame of the airplane seat according to Figs. 1 to 6 with the lateral plate according to Fig. 9 in the seat position;
- Fig. 11: shows the seat frame according to Fig. 10 with the lateral plate in the suitcase position;
- Fig. 12: shows the seat frame according to Fig. 10 including the suitcase shell according to Figs. 7 to 9 and a foot traverse connecting from front legs of the airplane seat;
- Fig. 13: shows the airplane seat according to the invention in a seat configuration with a completely collapsed backrest;
- Fig. 14: shows the airplane seat according to Fig. 13, wherein the suitcase shell and the backrest are rotated by 90 degrees such as to bring the airplane seat according to invention into the displayed, suitcase configuration which is more compact with respect the seat configuration;
- Fig. 15: shows the activation mechanism for collapsing the backrest and rotating to suitcase shell;
- Fig. 16: shows a detail of the backrest movement mechanism in disengaged collapsed position;
- Fig. 17: shows a detail of the backrest movement mechanism in engaged collapsed position;
- Fig. 18: shows the foot traverse connecting the front legs according to Fig. 5 and further figures in detail;
- Fig. 19: shows an adapter plate that may be integrated into an airplane for receiving and securing the airplane seat according to the invention including wheel retainer, latch slots and a foot board;
- Fig. 20: the adapter plate according to Fig. 19 with removed top floor plate for revealing interior details of the adapter plate including two wheel retainer elements, a foot board assembly, latch catcher boxes, and a central locking arrangement;
- Fig. 21: shows in a perspective view the foot board alone;
- Fig. 22: shows that foot board assembly in more detail;
- Fig. 23: shows the working principle of the foot board mechanism;
- Fig. 24: shows the latch catcher box without latch;
- Fig. 25: shows the latch catcher box with secured latch;
- Fig. 26: shows the wheel retainer elements in engagement with wheels of the airplane seat according to invention; and
- Fig. 27: shows a detail of Fig. 26.

### DESCRIPTION OF PREFERRED EMBODIMENTS

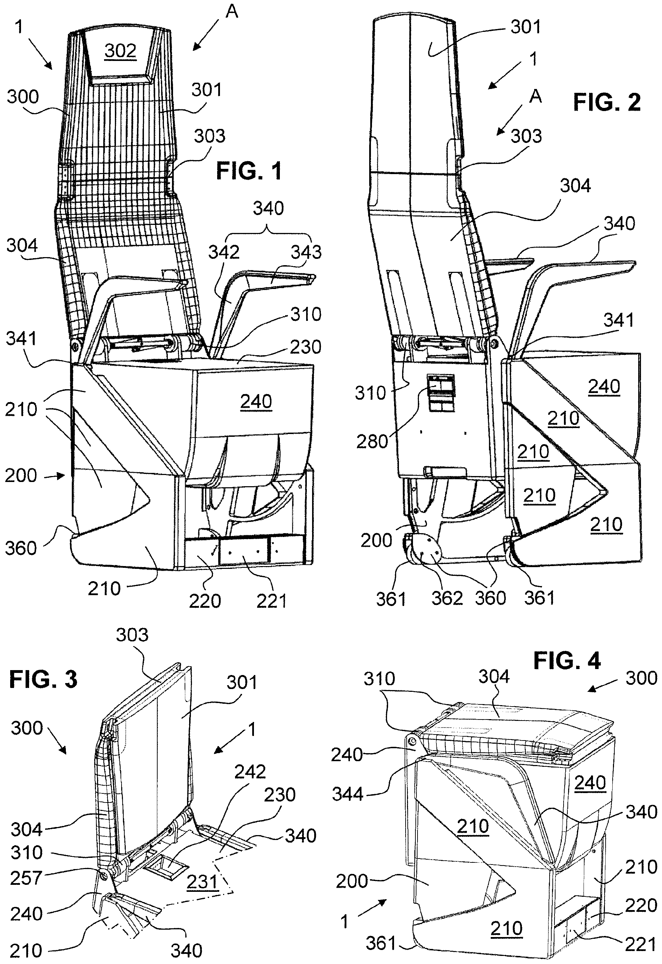

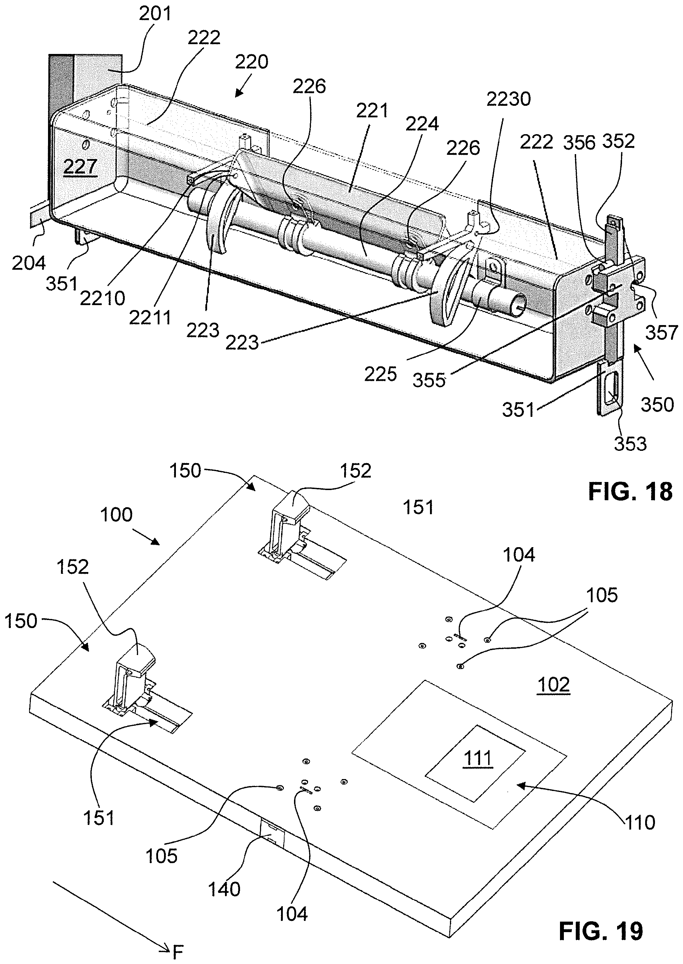

A preferred embodiment of the airplane seat 1 according to the present invention is now described with reference to the Figs. 1 to 18. A preferred embodiment of an adapter plate 100 according to the present invention is described below with reference to the Figs. 19 to 27. The present invention also relates to a seating system 10 including one seat 1 and one plate 100.

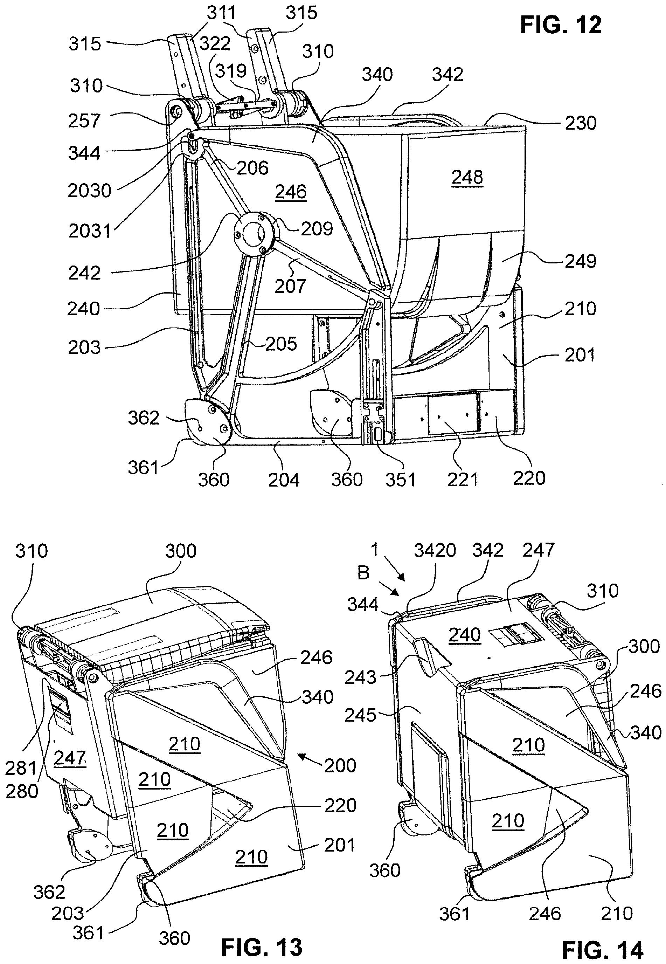

**Figures 1** and **2** show a preferred embodiment of the airplane seat 1 according to invention in a seat configuration. **Figure 14** shows the airplane seat 1 in the suitcase configuration. Figures 4, 13 show the airplane seat 1 in an intermediate configuration (collapsed backrest 300, suitcase shell in seat position).

The airplane seat 1 comprises a seat frame 200 with thereto laterally attached swiveling armrests 340. In Figs. 1 and 2, the armrests 340 are shown in a folded-out or extended arrangement, in Fig. 14, in a folded away or folded-in or -down arrangement. Furthermore, the seat frame 200 comprises a suitcase shell 240 that is arranged in said seat frame 200, between the armrests 340. The suitcase shell 240 can be swivelled by 90 degrees into the clockwise direction with respect to the seat configuration A as shown in Figs. 1 and 2 into a suitcase configuration B as shown Fig. 14. Moreover, the airplane seat 1 comprises a collapsible backrest 300. Figures 1 and 2 show the backrest 300 in the extended or folded-out configuration, while Fig. 14 shows said backrest 300 in the collapsed configuration.

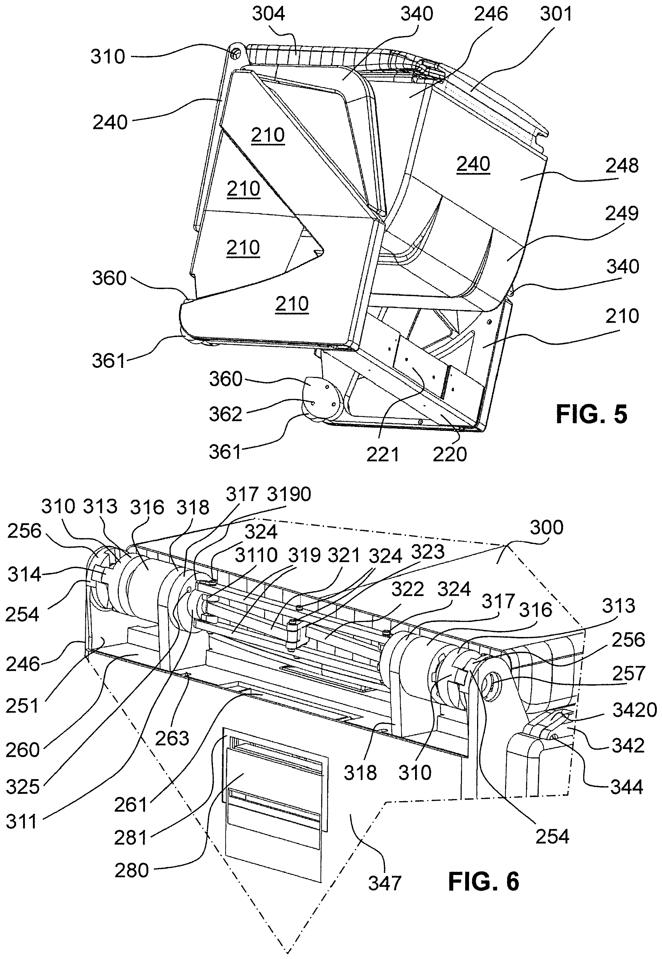

**Figure 3** shows a detail of Figs. 1 and 2, more precisely the backrest 300 in a semi-collapsed configuration. **Figures 4** and **5** show the backrest 300 in fully collapsed configuration, whilst the suitcase shell 240 is still oriented in the seat position. Figure 14 shows the backrest 340 in the completely collapsed configuration, whilst the suitcase shell 240 is rotated into the suitcase position.

From Figs. 1 to 5 and 14 it is apparent, that the backrest 300 comprises a top section 301 with an integrated head section 302 and a bottom section 304. The head section 302 is a recessed top region of the top section 301 that provides support to the seated passenger's head. The top section 301 and the bottom section 304 are linked together in a pivotable manner relative to one another by means of middle linkage 303. The top section 301 may be folded inwardly, *i.e.* toward the seating surface 231 of the airplane seat 1, onto the front surface of the bottom section 304 of the backrest 300. The middle linkage 303 may be designed such that the folded-out configuration is releasably locked in the seat configuration for ensuring a safe flight.

At the bottom of the backrest 300, a further linkage with two laterally positioned spline shafts 310 is arranged for pivoting the bottom section 304 of the backrest 300 (including the top section 301 attached thereto) from the seat position as shown in Figs. 1 and 2 into the collapsed position as shown in Figs. 4, 5 and 14 and back.

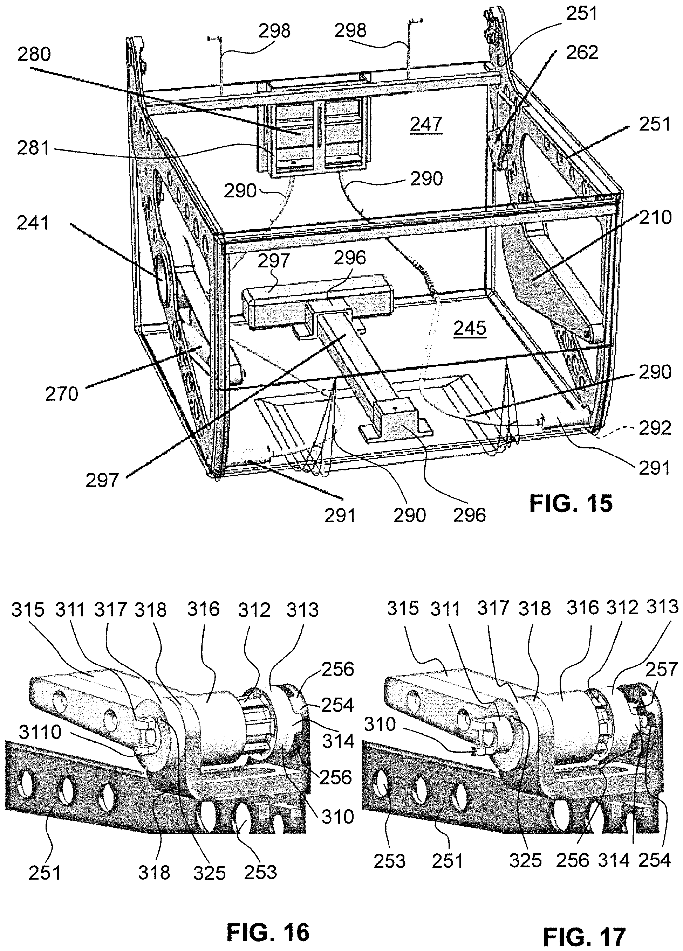

In the following, the bottom linkage of the backrest 300 comprising two spline shafts 310 is described in more detail with reference to **Figures 6**, **16** and **17**. Figure 16 and 17 show one of the spline shafts 310 in engagement position and in disengagement position, respectively. Also, Fig. 6 shows the spline shafts 310 in disengagement positions. With the spline shafts 310 in engagement position, the backrest 300 is locked; no rotation is possible. The two locking positions are the extended position as shown in Figs. 1 and 2 and the fully collapsed position as shown, for example, in **Figures 13** and **14**. Intermediate locking positions or a continuous locking position may be realized. To rotate the bottom segment 303, the spline shaft 310 should be moved from the engagement position (Fig. 16) into the disengagement position (Fig. 17).

Each spline shaft 310 comprises a first end section 311, a finned intermediate section 312, and a second end section 313. The first end section 311 has two arms 3110 with free ends, wherein the arms 3110 comprise holes for receiving a transversal pin. The first end section 311 has a smaller diameter than the rest of the spline shaft 310 and is received in a through hole of a suitcase shell hub 318. The suitcase shell hub 318 is L-shaped and attached to the lateral plate 251 integrated into the suitcase shell 240. The spline shafts 310 are arranged in said respective suitcase shell hubs 318 in a translatable manner such that they may travel into disengagement position or into engagement position. On the other side of the suitcase shell hub 318, the finned intermediate section 312 is extending towards the lateral plate 251. The intermediate section 312 has an increased diameter with respect to the first end section 311. Opposite the first end section 311, the second end 313 is arranged, which has an even more increase diameter and has, on its front face, a plurality of axial segment teeth 314.

The axial segment teeth 314 are arranged and positioned such that they may engage into the axial segment teeth 256 of the locking member 254 arranged on the lateral plate 251. The size and arrangement of the segment teeth 256, 314 is chosen such as to ensure the two locking positions as mentioned above (fully collapsed and extended positions). As can be seen in Figs. 16 and 17, if the spine spline shaft 310 is in the engagement position (Fig. 16), the segment teeth 314 of the spline shaft 310 and to segment teeth 256 of the lateral plate 251 are in engagement, whereby the spline shaft 310 is rotatably fixed to the respective lateral plate 251. Upon moving the spline shaft 310 into the disengagement position (Fig. 17), the segment teeth 314 of the spline shaft 310 and the segment teeth 256 of the lateral plate 251 are disengaged; accordingly, a rotation of the bottom segment 303 between the extended and collapsed position is possible.

Moreover, between the suitcase shell hub 318 and the second end section 313, there is arranged the spline shaft hub 315 with the toothed bushing 316. The toothed bushing 316, and thereby the spline shaft hub 315, is locked to the finned intermediate section 312 by a positive fit with the spline shaft 310 with respect to rotation about the spline shaft 310. Moreover, on the other side of the suitcase shell hub 318 there is arranged the backrest hub 317 which further guides the first end section 311 and connects the backrest 300 to the spline shaft 310. The spline shaft 310 may therefore translate along its axis of rotation through the backrest hub 317, the suitcase shell hub 318 and the toothed bushing 316. The spine shaft 315 and the respective backrest hub 317 are connected to one another by means of screws; the two hubs 315, 317 have each a lever to receive the backrest 300.

Moreover, Fig. 6 shows a mechanical connection between the two spline shafts 310 that rotatably locks the two shafts 310 while allowing a movement toward and away from one another along the longitudinal direction of the shafts 310.

This mechanical connection comprises first and second connecting rods 321, 322 that are arranged between two respective arms 3110 of the respective first end section 311 of the spline shaft 310, respectively. The first and second connecting rods 321, 322 extend towards the middle region between the two spline shafts 310. The first and second connecting rods 321, 322 are connected to one another means of a transversely extending, H-shaped dislocation linkage 323 that is arranged in said middle region as shown in Fig. 6. The first and second connecting rods 321, 322 are rotatably secured in said H-shaped dislocation linkage 323 by means of pins. Moreover, the first and second connecting rods 321, 322 are each connected to their respective arms 3110 by means of another pin 324. These pins 324 extend on both sides beyond the first and second connecting rods 321, 322 and serve as a further linkage for receiving on each side a swivel point rod 319. Both swivel point rods 319 are provided, at their free ends, with a slot 3190 for receiving the respective pin 324. The swivel point rods 319 also are connected to the H-shaped dislocation linkage 323 by means of a pin as shown in Fig. 6. This mechanical connection between the two spline shafts 310 ensures a synchronous rotation and allows translation of the two spline shafts 310 and thereby allows for a simultaneous engagement/disengagement of the spline shafts 310 from the respective L plate 251.

As can be seen from the figures, the backrest 300 is generally ergonomically formed. Particularly, the top section 301 and the bottom section 304 may be somewhat inclined with respect to one another and, in particular, the bottom section 304 may be providing side support to the seated passenger in the lower back region. Moreover, the backrest 300 width (lateral direction) is tapering towards the top. It is, however, to be understood that the shape of the backrest 300 may have any desired shape.

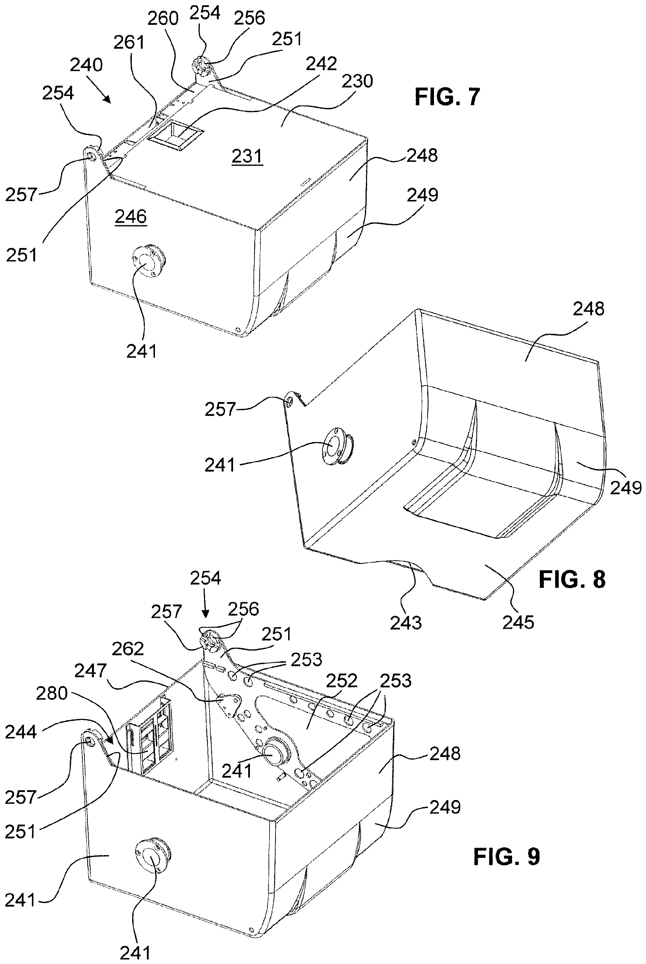

**Figures 7** to **9** show the suitcase shell 240 in more detail. The suitcase shell 240 is a case or container with an access opening 244 for receiving luggage into an interior stowing space of the suitcase shell 240. The shell 240 may be a single piece element with, as seen in seat position, a bottom wall 245, two lateral walls 246, a front wall 248 with a rounded lower section 249, a back wall 247.

Moreover, a cover plate 230 is provided for covering the access opening 244. Said cover plate 230 is attached to the suitcase shell 240 in a pivotable manner and may be opened for access to the interior space of the suitcase shell 240. Moreover, the cover plate 230 provides, with its exterior surface, the seating surface 231 of the airplane seat 1. The seating surface 231 may also be ergonomically shaped and/or cushioned (not shown). In the cover plate 230, there is integrated a buckle box 242 for receiving the passenger's security belt including the buckle (not shown).

The interior space of the suitcase shell 240 may have a volume of about 0.01 to 0.1 cubic meters, preferably, of 0.025 to 0.075 cubic meters, depending on the exact geometry of the suitcase shell 240.

In the middle of each lateral wall 246 is arranged a rotation shaft 241 for engaging the suitcase shell 240 to the seat frame 200 in a rotatable manner. As can be seen from the Figs. 7 to 9, the rotation shaft 241 projects beyond the respective lateral wall 246 and, on the outside, comprises a terminal flange for attachment to the shaft mounting 209 of the seat frame 200.

Figure 9 shows the interior space of the suitcase shell 240. On the inside of each lateral wall 246 is arranged a lateral plate 251. The lateral plate 251 is fixedly attached to the respective lateral wall 246. The lateral plate 251 has a substantially triangular shape, wherein a hypotenuse runs diagonally across the lateral wall 246 as shown in Fig. 9. The longer leg of each of said triangular shaped lateral plates 251 runs along the respective top edge of the suitcase shell 240 in seat position. The shorter leg runs along the lateral edge of the front wall 248 of the shell 240. To minimize the overall weight of the seat 1, the lateral plate 251 comprises a main recess 252 and several smaller through holes 253 through its legs and hypotenuse. Each of the lateral plates 251 comprises, at its back corner, said locking member 254 consisting of a circular disk with a through hole 257 for receiving the respective spline shaft 310 and of the segmented teeth 256 encircling the through hole 257 and arranged on said disk for engagement with the teeth 314 of the respective spline shaft 310.

The above-mentioned security belt is attached to the lateral plate 251 by means of a belt fastening member 262 as shown in Fig. 9.

Moreover, in the back region in Fig. 7, there is shown a shell traverse 260, which connects the two lateral plates 251 with one another. The shell traverse 260 comprises a central recess 261 for guiding through a telescopic handle 297 (see Fig. 15). Moreover, it comprises two further recesses 263 for passage of securing wires 298, see below.

The seat frame 200 comprises several cover shells 210 (see, for example, Figs. 1 to 5) to dress and protect the mechanics integrated into seat frame 200. The cover protects the user from injury when operating the airplane seat 1 and improves the overall impression of the airplane seat 1.

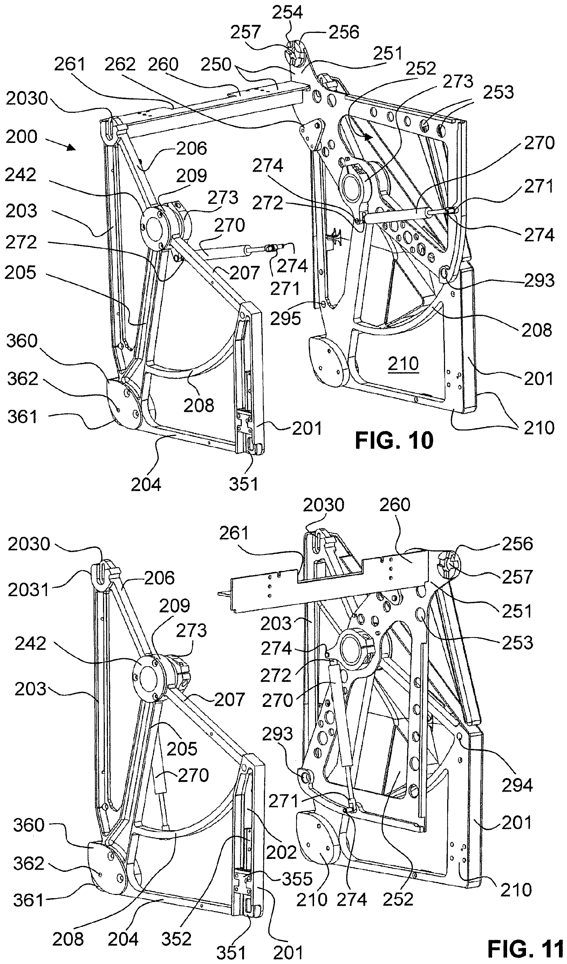

**Figures 10** to **12** show the seat frame 200 in more detail whilst leaving away some of its parts including some of the cover shells 210.

The seat frame 200 comprises two front legs 201 and two back legs 203. In the front legs 201 are provided latch chambers 202 in each of which a vertically movable latch 351 is arranged. The latch 351 is translating upon actuation along the longitudinal direction of the respective front leg 201 as will be described in more detail with reference to Fig. 18 below.

The back legs 203 have, at their upper ends, a slot 2030 that is surrounded in its lower part by an abutment element 2031 for receiving and securing the armrests 340, see below.

The back and front legs 201, 203 are connected to one another by bottom lateral horizontal struts 204. At the top, a top back diagonal strut 206 and a top front diagonal strut 207 connect the respective back and front legs 201, 203 to one another. Between the back and front legs 201, 203, where the top front and top back diagonal struts 206, 207 meet, a shaft mounting 209 for receiving the rotation shaft 241 of the suitcase shell 240 is arranged. Moreover, a bottom back diagonal strut 205 extends from a lower section of the respective back leg 203 to the shaft mounting 209. In addition, the top section of the front legs 201 is connected to the bottom of the respective back leg 203 by means of a curved pin track strut 208. At respective ends of the curved pin track strut 208 are arranged a front hole 294 (see Fig. 10) and a back hole 295 (see Fig. 11). These front and back holes 294, 295 define the seat position and the suitcase positon of the suitcase shell 240 and may accommodate the securing pin 292 attached to the respective lateral wall 246.

The rotation shaft 241 of the suitcase shell 240 is received in the shaft mounting 209 such that the flange of the shaft 241 abuts on the outside of the shaft mounting 209. On the inside section, relative to the seat frame 200, a gas strut lever 273 is arranged. The gas strut lever 273 is rotationally fixed to the frame 200 (accordingly, it does not rotate with the shell 240) and has an arm with a free end, at which a second end of the gas strut 270 is rotatably attached.

The gas strut 270 comprises a first end 271 and the second end 272, wherein the first end 271 is attached by means of a pin 274 to the arm of the gas strut lever 273 while the second end 272 is rotatably attached by means of a further pin 274 to a middle region of the short leg of the respective lateral plate 251. The gas strut 270 helps the passenger to find the seat position of the suitcase shell 240 as shown in Fig. 13 and the suitcase position of the suitcase shell 240 as shown in Fig. 14 when rotation the shell 240. Preferably, the gas strut 270 is arranged such that it reaches its compressed configuration close to a middle region of the rotation path between the seat position and the suitcase position of the suitcase shell 240. Thereby, the passenger has to manually rotate the suitcase shell 240 until the gas strut 270 reaches its compressed configuration, whereupon the gas strut 270 takes over and pushes the suitcase shell 240 into its designated position.

Figure 10 shows the seat frame 200 with one lateral plate 251 in the seat position. The recess 293 (into which a retractable securing pin 292 is inserted, see below and in particular Fig. 15) is aligned with the front hole 294 (indicated in Fig. 11). The lateral plates 251 may be rotatably fixed in the seat positon or the suitcase position to the seat frame 200 in that the securing pins 292 fixedly attached to the respective lateral plates 251 extend into the front hole 294 and the back hole 295 into the seat frame 200, respectively.

At the bottom end of each of the back legs 203 is arranged a wheel house 360 into which a wheel 361 is fitted. The wheel 361 is rotatably accommodated in said wheel house 360 by means of an axle 362. As can be seen from the Figs. 10 and 11, the wheel house 360 is formed by two substantially tear-shaped plates that are attached to the respective back leg 203. Cover elements 210 are applied. The sharp end of the tear-shaped wheel house 360 is directed backwards and the axle 362 and the wheel 361 are arranged such that the wheel 361 is protruding out of the wheel house 360 over the entire back corner region. This ensures that the airplane seat 1 in the suitcase configuration B may be conveniently rolled or towed in an inclined orientation by pushing or pulling it by means of the extended telescopic handle 297.

The comparison between Figs. 10 and 11 shows the plurality of appropriately shaped cover shells 210 that are used to dress the above described seat frame parts.

**Figure 15** shows the activation mechanism for enabling a conversion from the seat configuration A to the suitcase configuration B and back. In the back wall 247, there is arranged an interlock handle box 281, which accommodates an interlock handle 280. The interlock handle 280 may be shifted in said box 281 for activating Bowden cables 290. The Bowden cables 290 extend to a securing pin housing 291 arranged on each of the lateral plates 251, at the corner region between the hypotenuse and the short leg of the substantially triangular lateral plates 251. The securing pin housing 291 is fixedly attached to the respective lateral plate 251. The securing pin housings 291 accommodate an extendable securing pin 292 which, in extended position, may extend into a front or back hole 294, 295 provided in the seat frame 200 for securing the lateral plate 251, and thereby the suitcase shell 240, in the seat position and the suitcase position, respectively. Upon activation of the respective Bowden cable 290, the respective securing pin 291 is retracted, preferably against a return spring member, from the extended engagement position into a disengagement position such that the suitcase shell 240 may be rotated between the seat position and the suitcase position. Said spring member may bring the securing pin 292 back to its default extended position.

The spline shafts 310 may be shifted between engagement and disengagement position as shown in Figs. 16 and 17, respectively, by hand. In a preferred embodiment, the spline shafts 310 are hollow shafts and an actuation or push element, preferably made from plastics, is inserted from the outside through the opening 257 into the central hollow space of the respective spline shaft 310 and fixedly connected therein. The actuation element protrudes out of the 257 opening in the engagement position according to Fig. 16. The passenger may manually push-in the actuation into the opening 257, whereby the respective spline shaft 310 is shifted out of the engagement position (Fig. 16) and into the disengagement position according to Fig. 17. Preferably, a return spring member is arranged between any one of the hubs 315 to 318 and the respective spline shaft 310 such that said spline shaft 310 is automatically pushed into the engagement position according to Fig. 16. The passenger pushing the actuation element through the 257 opening for effecting a manually driven rotation of the backrest 300 has to work against said return spring member.

Furthermore, securing wires 298 are fastened in fastening recess 325 in each backrest hub 317. The securing wires 298 are substantially stiff elements that are guided through recesses 263 in the shell traverse 260 into the interlocking handle box 281. If the backrest 300 and the spline shafts 310 are in extended position as seen, for example, in Figs. 1 and 2, the securing wires 298 engage into the interlocking handle box 281 such as to block the interlocking handle 280 from actuating the Bowden cables 290. This avoids that rear passengers accidentally activate the interlocking handle 280 while the airplane seat 1 is installed for travel. If the backrest 300 and the spline shafts 310 are in collapsed position as seen, for example, in Fig. 4, the securing wires 298 no longer block the translation motion of the interlocking handle 280 such that the interlocking handle 280 may be activated to disengage the suitcase shell 240 for rotation into the suitcase position as seen in Fig. 14.

The Bowden cables 290 may generally act against return spring elements that bring the actuated element back to its original position.

Moreover, Fig. 15 shows an embodiment of the telescopic handle 297 attached to the back wall 247 by means of telescopic handle mounting elements 296. Figure 15 shows a T-shaped handle in its collapsed configuration, of course a differently shaped handle may be deployed. Figure 14 shows an appropriately shaped recess in the bottom wall 245 for receiving a gripping portion of the telescopic handle 297. The recess for the gripping portion of the telescopic handle 297 is covered by the cover 243. The cover 243 comprises an opening for passage of the telescope arm of the telescopic handle 297.

The armrests 340 are generally L-shaped comprising a first armrest portion 342 and a second armrest portion 343 attached to said first armrest portion 342. Each free end of the first armrest portion 342 is attached to the seat frame 200 in the region of the respective spline shaft 310. For attaching the armrests 340 the seat frame 200, the first armrest portion 342 has a through slot 3420 at its free end, wherein a pin 344 is arranged inside the first portion 342, extending transversely and through said slot 3420. The seat frame 200 has at the top ends of the back legs 203 vertical slots 2030 (*cf.* Figs. 10 and 11). Around its lower circumference, said slot 2030 is encircled by a half-ring like abutment element 2031 that is arranged offset to said slot 2030 thereby creating a step for receiving the free end of the first armrest portion 342 (*cf.* Fig. 10 and 11) whilst the pin 344 engages into said slot 2030. Accordingly, the seat frame 200 and each armrest 340 are attached to one another in a hinged manner in that said pin 344 is inserted into said slot 2030.

If the pin 344 is positioned at a bottom end of the slot 2030, the free end portion of the first armrest portion 342 is received in said abutment element 2031 in a form fit manner, whereby the armrest is secured in a folded-out position as shown, for example, in the Figs. 1 and 2; it may not be rotated in this position.

If the armrest 340 is pulled upwards, the pin 344 translates upward in said slot 2030 and, when the free end of the first armrest portion 342 has left the abutment element 2031 and is therefore free for rotation, the armrest 340 may be rotated down as shown, for example, in Fig. 5. Accordingly, the armrests 340 may be simply folded away by pulling them up and then rotating them down and vice versa.

**Figure 18** shows the foot traverse 220 with the latch movement mechanism for anchoring the front legs 201 in an adaptor plate 100. The adaptor plate 100 may be integrated into a floor of a vessel, particularly into the floor of an airplane.

The foot traverse 220 is basically a box-shaped hollow element with a rectangular cross-section that connects the bottom sections of the front legs 201. In a front face of the foot traverse 220 is arranged a swiveling flap 221 that may be pushed into the foot traverse 220. As can be seen in Fig. 18, the flap 221 is arranged with its bottom edge to the foot traverse 220. The flap 220 is attached by means of a flap shaft 224 which is fastened to the flap 220 and extends along the longitudinal direction of the foot traverse 220. The flap shaft 224 protrudes beyond the flap 221 and is rotatably fixed with its protruding portions by means of flap shaft mounting elements 225 to the inner surface of the front face of the foot traverse 220.

The flap 221 is a substantially plate-like element, wherein its lateral end portions are bent by 90 degrees to extend transversely to the front face of the foot traverse 220 such as to form wings 2210 on either side of the flap 221. The wings 2210 taper towards the flap shaft 224 and are each provided with a hole 2211. A flap cable 222 is secured in each hole 2211. Each flap cable 222 is then guided to a flap cable guide 223 which is arranged in the foot traverse 220, close to the flap shaft mounting elements 225 as shown in Fig. 18. The flap cable guide 223 comprises a through opening 2230 arranged close to the front face of the foot traverse 220. Each flap cable 222 is guided through the respective through hole 2230 and extends to and through the respective lateral face 227 into the bottom part of the front leg 201, where a latch holder 355 of a latch fitting 350 is fixedly attached to the front leg 201. The latch holder 355 is arranged in the lower part of the latch chamber 202.

As can be seen from Fig. 18, the latch cable 222 is guided through the latch holder 355 via a cable guide 357 and then guided upwards to be attached to an upper part of a rod-like latch body 352. The latch body 352 extends vertically through the latch holder 355 and may be shifted therethrough. Figure 18 shows the latch body 352 in its lowest position, the lowest position being defined by a transverse pin 356 in the latch body 352, wherein the transverse pin 356 abuts against an appropriately shaped top surface of latch holder 355.

Moreover, the latch body 352 is provided at its lower end with a latch 351 with a central opening 353. In the extended or bottom position as shown in Fig. 18, the latch 351 protrudes out of the latch chamber 202 downward beyond the leg 201 for engagement with the adapter plate 100. The latch mechanism may be provided with a return spring member arranged in the chamber 202, the spring member pulling the released latch body 352 out of the bottom position as shown in Fig.18 into a retracted upward position. Upon pushing the flap 220 into the foot traverse 220, as shown in Fig. 18, each flap cable 222 is pulled through the cable guides 2230 and 357, whereby the latch body 352 is pulled, against the spring and under guidance of the latch holder 355, down into its extended position where the transverse pin 356 stops against the latch holder 355 such that the latch 351 protrudes beyond the leg 201.

A preferred embodiment of the adapter plate 100 according to invention is explained with reference to the Figures 19 to 27.

**Figure 19** shows in a perspective top view the adapter plate 100 comprising a top floor plate 102. A wheel retainer assembly comprises two wheel retainers 150 provided in said adapter plate 100. Each wheel retainer 150 comprises a swiveling, hook-like retainer element 152 which is shown in an extended position and which may be rotated into a recess 151 in the plate 100. The wheel retainer elements 152 are used engage the airplane seat 1 with the adapter plate 100.

The hook-like shape allows to accommodated the wheels 361 without extra-loading the wheels 361. The hook-like retainer elements 152 directly contact the wheel housing 360, on the horizontal top surface just above the axle 363.

The adapter plate 100 comprises two latch slots 104 into which the latch is 351 may be inserted for securing the airplane seat 1 to the adapter plate 100 when the wheels 361 are received in the wheel retainers 150.

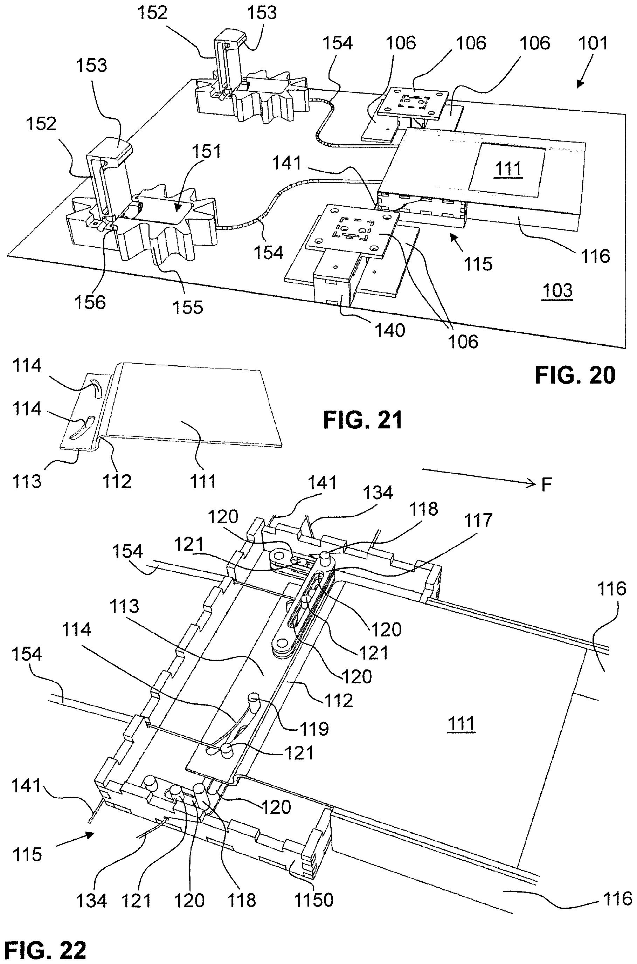

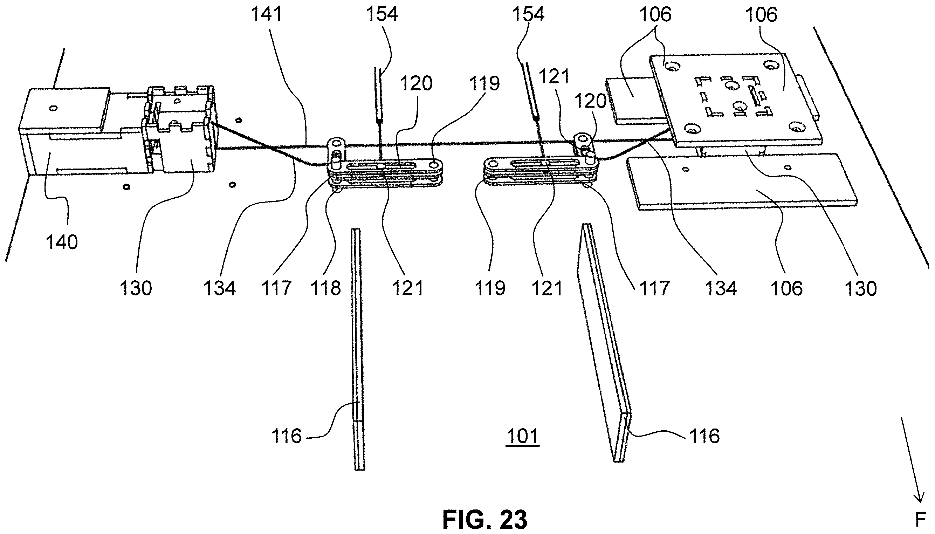

Moreover, in the right part of Fig. 19, a foot board assembly 110 with a foot board 111 is shown. The foot board 111 is partly accessible from the outside and movable along the adapter plate 100 for each folding-out the wheel retainers 150 and for releasing any latch 351 inserted into latch slot 104. Moreover, several screw holes 105 are visible for connecting mounting plates 106 (see Figs. 20 and 23) with the top floor plate 101.

The arrow F indicates the typical direction of travel of the adapter plate 100.

**Figure 20** shows the subject-matter of Fig. 19, while the top plate 102 is removed to reveal the floor plate core 101. Figure 20 shows a bottom floor plate 102 on which, on the left in Fig. 20, base elements 155 are arranged. The base elements 155 are provided with the recesses 151 for accommodating the wheel retainer elements 152 which creates a flush top surface of the plate 100 if the elements 152 folded-in.

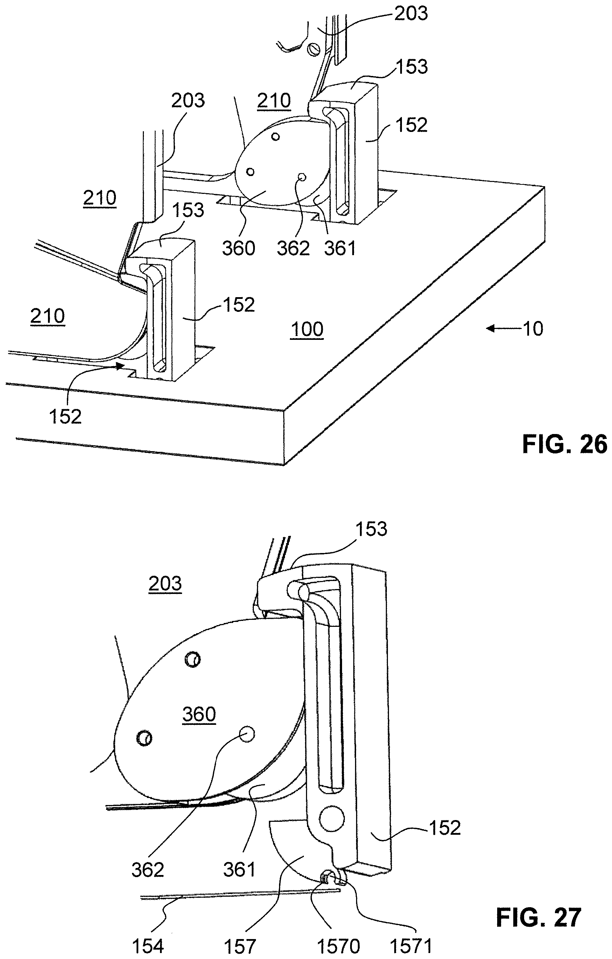

The swiveling retainer elements 152 for catching the wheel housing 360 are L-shaped with a short, deflected portion 153 and a long portion. The base elements 155 comprise mounting grooves 156 for receiving a shaft (not shown) attached to a free end of said long portion of the retainer element 152, whereby the wheel retainer elements 152 are rotatably arranged in said adaptor plate 100 and may be rotated in and out of the recesses 151. Accordingly, the wheel retainer elements 152 may be rotated between an extended position as seen in Figs. 19 and 26 and a retracted position (not shown) in which the retainer elements 152 are accommodated in the respective recesses 151 such that the top surface of the adapter plate 100 is substantially flush.

**Figures 26** and **27** show the wheel retainer elements 152 in more detail. The deflected portion 153 of the extended wheel retainer element 152 engages the back and top surface of the wheel housing 360 and thereby secures the airplane seat 1 to the adapter plate 100. The rotation of the wheel retainer elements 152 is effected by respective wheel retainer cables 154 which are attached to a respective mounting disk 157 arranged on the elements 152. The mounting disk 157 is a substantially quarter-ring shaped disk with a groove 1570 on its circumferential curved face for receiving the cable 154. At the lower region of the mounting disk 157, at the end of that groove 1570, there is arranged a part cylindrical recess 1571. The end of the wheel retainer cable 154 may be engaged to a cylinder element which is inserted in said part cylindrical recess 1571 for securing the cable to the mounting disk 157. Moreover, there is a return spring element (not shown) arranged in operative connection with the respective wheel retainer elements 152 such as to put to the wheel retainer elements 152 into the retracted position. Upon applying a pulling force to the wheel retainer cables 154, the mounting disks 157, and the wheel retainer elements 152 fixedly attached thereto, rotate around the wheel retainer shaft (not shown) into the extended position as shown, for example, in Fig. 26.

**Figure 22** shows the foot board assembly 110 including the foot board 111 according to **Figure 21** in more detail. The foot board assembly 110 comprises said foot board 111 which is arranged in a foot board box 115 that has two lateral walls 116 and a box frame 1150. The foot board 111 is guided between the lateral walls 116. As can be seen from Fig. 21, the foot board 111 is of a rectangular shape and has, in the region of one of its narrow edges, a step which is realized by a rounded deflected section 112, whereby an offset foot section 113 is created that is substantially parallel to a main section of the foot board 111. Moreover, the foot section 113 is provided with two curved slots 114 as shown in Fig. 21.

Figure 22 and **Figure 23** show, on the left side when facing into the direction of travel F, a two-lever arm 117 rotatably arranged on a vertical pin 118. In Fig. 23, some elements have been removed for clarity. The two-arm lever 117 has a short arm which is oriented along the direction of travel in Fig. 22 and a long arm which is arranged at right angles to said short arm. The short and the long arm are fixed relative to one another and may rotate about the pin 18. Both arms comprise slots 120 along their respective lengthwise direction. As can be seen from Fig. 23, the two-lever arms 117 comprise a plurality of plate-like elements. These plate-like elements are attached to one another by means of pin 118 and further pins 119, the pins 119 being attached at the free ends of the long and short arms of each of the two-arm levers 117. In Fig. 20 the right two-arm lever 117 is partly removed such as to reveal that the terminal pins 119 inserted into the long arms are engaging into and guided by the respective curved slots 114 on the foot board 111. The terminal pins 119 in the short arms travel freely.

A slot stone 121 is arranged between the two top most plate-like elements of each of the two-arm levers 117. The slot stones 121 may be moved along the respective slot 120 of the respective arm of the two-arm levers 117. Each wheel retainer cable 154 is attached to the respective slot stone 121 in the long arm of the two-arm lever 117, while bolt cables 134 are attached to respective slot stones 121 guided in the short arm of the two-arm levers 117. The movability of the slot stones 121 ensures that the respective attached cables 134, 154 remain optimally oriented during rotation of the respective two-arm lever 117.

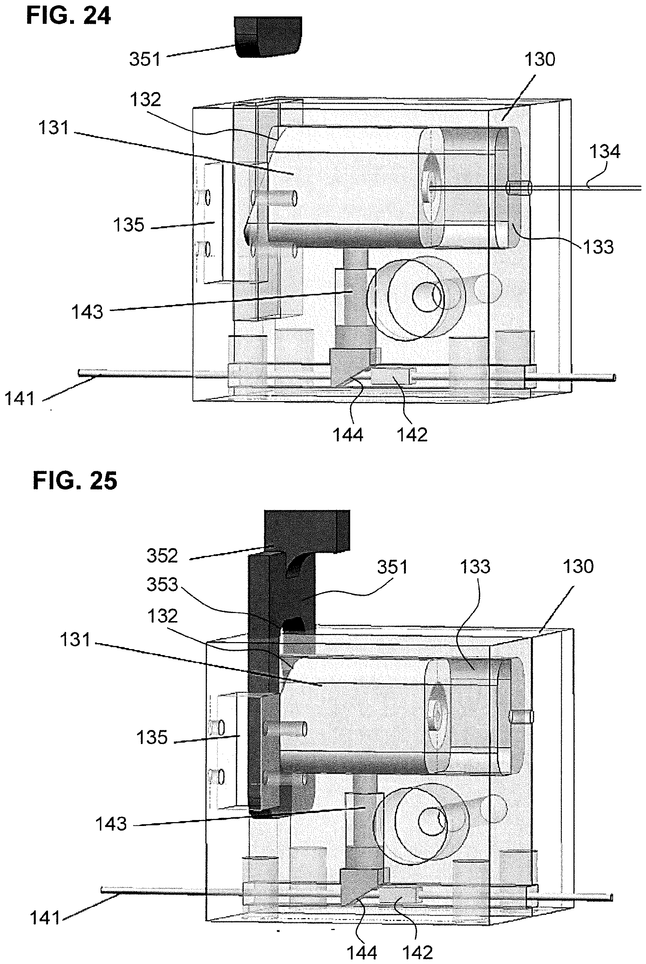

The foot board 111 may be shifted from the positon as shown in the Figs. 22 and 23 such that the two-arm levers 117 connected to the foot board 111 via pins 119 in the long arms of 117 are rotated against each other. This rotation of the levers 117 pulls the cables 134 and 154 into the foot board box 115, thereby bringing the wheel retainer elements 152 against a return spring element (not shown) from the collapsed position into the extended position as shown, for example, in Fig. 26 and bringing the latch bolt 131 (see Figs. 24, 25) against a return spring element (not shown) from a locking position (Fig. 25) into a release position such that the latches 351 are released and may be pulled out of the latch slots 104.

Upon foot board 111 activated rotation of the levers 117, the pins 119 travel in the curved slots 114.

A top surface of the foot board 111 may be provided with an anti-slip coating and/or structure such that the passenger easily finds grip thereon with his foot for moving the foot plate 111 horizontally in said foot board box 115 for activating the wheel retainers 150 or for releasing the latches 351 engaged in latch slots 104.

Next, the latch catching mechanism is explained with reference to **Figures 24** and **25**. The latch catching mechanism is a mechanism that locks the front legs 201 to the adapter plate 100. Below each latch slot 104 (see Fig. 19) is arranged a latch catcher box 130 (see Fig. 20). The latch catcher box 130 is a housing with a horizontal latch bolt guide 133 in which a latch bolt 131 may translate in a direction parallel to a top surface of the adaptor plate 100. The latch catcher box 130 is mounted into the adapter plate 100 by means of mounting plates 106. A front end of the latch bolt 131, designed for engagement with the latch 351, has an inclined surface (with respect to the motion direction of the latch 351). A back end of the latch bolt 131 is engaged to the bolt cable 134 which is pulled back against the return spring element upon rotation of the two-arm lever 117.

A feeler may be integrated into a recess 135 for providing information about the latch locking state to a central information system, e.g. to inform the crew or pilot about the locking state of the seats 1 aboard the airplane.

Accordingly, the passenger may move his seat 1 onto the adapter plate 100 with collapsed wheel retainers 150, whereupon the passenger may step on the foot board 111 to shift the foot board 111 in the flight direction. This causes the wheel retainers 150 to fold up against the return spring element. The passenger may push the wheel houses 360 into the retainers 152 and may release the foot board 111 and put the seat 1 down. Thereafter, the passenger may push the flap 221, whereupon the latches 351 are pushed against the return spring element into the slots 104. Due to the inclined surfaces 132, the latches 351 automatically push back the latch bolts 131 against the respective return spring elements. Once the latches 351 are in fully extended position, the latch bolts 131 may snap-back into latch openings 352 due to the return spring element, whereby the latches 351 are locked and the seat 1 is properly secured to the adaptor plate 100. The backrest 300 may be extended as described above.

Moreover, the adaptor plate 100 provides elements for a central locking system which may be activated, in case of an airplane, by the pilot or crew before take-off and after the electronic system including the feeler signals proper locking state. The central locking ensures that no seat 1 is manipulated during flight.

The central locking system comprises a central locking housing 140 which accommodates a return spring member and a central locking cable 141 attached to said spring member. The central locking housing 140 is preferably attached to the adapter plate 100 by means of mounting plates 106. The central locking cable 141 extends from the housing 140 below the latch bolts 131 (see Figs. 23 to 25) to an activation unit which pulls the central locking cable 141 upon command (*e*.*g*. from the pilot) against the spring member. Between the central locking cable 141 and the latch bolt 131 is arranged a movable central locking pin 143. The locking pin 143 has, at is lower section, a block with an inclined surface 144. On the central locking cable 141, close to the inclined surface 144, is arranged a central locking trigger 142. If the central locking system is open, as in Figs. 24, 25, the central locking pin 143 is arranged spaced to the latch bolt 131 in engagement position. Upon pulling the central locking cable 141, the central locking trigger 142 travels to engage and push upwards the inclined surface 144, whereupon the central locking pin travels towards the latch bolt 131 and engages into a hole in the latch bolt 131. As the central locking pin 131 is arranged at right angles to the latch bolt 131, the latch bolt 131 may not move freely anymore if the central locking pin 143 engages into the latch bolt 131. Accordingly, the latch 351 remains locked.

Moreover, as the latch bolt 131 may not move anymore, the Bowden cable 134 (bolt cable) is also block, which, in turn, blocks the foot board 111. Accordingly, by blocking the latch bolts 131 with the central locking system, also the wheel retainer elements 152 that are not extended, i.e. that are in collapsed position, are locked as the foot board 111 may not be activated to release the wheel retainer elements 152.

**LIST OF REFERENCE SIGNS**

| | | | |
|---|---|---|---|
| 1 | airplane seat | 134 | bolt cable |
| | | 135 | recess for a feeler |
| 100 | adapter plate | | |
| 101 | floor plate core | 140 | central locking housing |
| 102 | top floor plate | 141 | central locking cable |
| 103 | bottom floor plate | 142 | central locking trigger |
| 104 | latch slot | 143 | central locking pin |
| 105 | screw hole | 144 | inclined surface |
| | | | |
| 106 | mounting plate | 150 | wheel retainer |
| | | 151 | recess for 152 |
| 110 | foot board assembly | 152 | swiveling retainer element |
| | | 153 | deflected portion |
| 111 | foot board | 154 | wheel retainer cable |
| 112 | deflected section | 155 | base element |
| 113 | foot section | 156 | mounting groove |
| 114 | curved slot | 157 | mounting disc |
| 115 | foot board box | 1570 | groove in 157 |
| 1150 | box frame | 1571 | recess at end of 1570 |
| 116 | lateral wall of 114 | | |
| | | 200 | seat frame |
| 117 | two-arm lever | 201 | front leg |
| 118 | pin | 202 | latch chamber |
| 119 | terminal pin | 203 | back leg |
| 120 | lever arm slot | 2030 | slot for pin of 340 |
| 121 | slot stone | 2031 | abutment element |
| | | 204 | bottom horizontal strut |
| 130 | latch catcher box | 205 | bottom back diagonal strut |
| 131 | latch bolt | 206 | top back diagonal strut |
| 132 | inclined surface | 207 | top front diagonal strut |
| 133 | bolt guide | 208 | pin track strut |
| 209 | shaft mounting | 252 | main recess in 251 |
| | | 253 | hole in 251 |
| 210 | cover shell | 254 | locking member |
| | | 256 | segment tooth of 254 |
| 220 | foot traverse | 257 | recess for 310 |
| 221 | flap | | |
| 2210 | flap wing | | |
| 2211 | hole in 2210 | 260 | shell traverse |
| 222 | flap cable | 261 | recess in 260 for telescopic |
| 223 | flap cable guide | | handle |
| 2230 | through opening | 262 | belt fastening member |
| 224 | flap shaft | 263 | securing wire recess |
| 225 | flap shaft mounting element | | |
| 226 | flap mounting | 270 | gas strut |
| 227 | lateral face of 220 | 271 | first end 270 |
| | | 272 | second end of 270 |
| 230 | cover plate | 273 | gas strut lever |
| 231 | seating surface | 274 | pin |
| 240 | swivel suitcase shell | 280 | interlock handle |
| 241 | rotation shaft | 281 | interlock handle box |
| 242 | buckle box | | |
| 243 | cover for telescopic handle | 290 | Bowden cable |
| | (Fig. 14) | 291 | securing pin housing |
| 244 | access opening (Fig. 9) | 292 | securing pin |
| 245 | bottom wall of 240 | 293 | reception for 291 |
| 246 | lateral wall of 240 | 294 | front hole for 292 (Fig. 11) |
| 247 | back wall of 240 | 295 | back hole for 292 (Fig. 10) |
| 248 | front wall of 240 | | |
| 249 | rounded wall section of 240 | 296 | telescopic handle mounting |
| | | 297 | telescopic handle |
| 250 | shell frame | | |
| 251 | lateral plate | 298 | securing wire |
| | | 323 | H-shaped dislocation linkage |
| 300 | backrest | 324 | connecting pin |
| 301 | top segment of 300 | 325 | fastening recess for 298 |
| 302 | head rest in 301 | | |
| 303 | bottom segment of 300 | 340 | swivel armrest |
| 304 | middle linkage of 300 | 341 | armrest hinge |
| | | 342 | first armrest portion |
| 310 | spline shaft | 3420 | slot |
| 311 | first end section of 310 | 343 | second armrest portion |
| 3110 | arm of 311 | 344 | pin (Figs. 4, 6) |
| 312 | finned intermediate section | | |
| 313 | second end section 310 | 350 | latch fitting |
| 314 | axial segment teeth | 351 | latch |
| 315 | spline shaft hub | 352 | latch body |
| 316 | toothed bushing | 353 | latch opening |
| 317 | backrest hub of 310 | 355 | latch holder |
| 318 | suitcase shell hub of 310 | 356 | pin |
| 319 | swivel point rod | 357 | cable guide |
| 3190 | slot in 319 interlock handle box | | |
| | | 360 | wheel fitting/house |
| 320 | slot at free end of 319 | 361 | wheel |
| 321 | first connecting rod | 362 | axle of 361 |
| 322 | second connecting rod | | |

## Claims

1. A removable passenger seat (1) for an airplane comprising:
a suitcase shell (240) for stowing luggage; and
a collapsible backrest (300);
wherein the seat (1) further comprises a seat frame (200), wherein said suitcase shell (240) is arranged in said seat frame (200), wherein said suitcase shell (240) is arranged in a swiveling manner such that said seat (1) may be converted from a seat configuration (A) into a suitcase configuration (B) and back by collapsing said backrest (300) and by swiveling said suitcase shell (240) from a seat positon to a suitcase position, and
wherein the said suitcase shell (240) comprises an access opening (244), wherein said access opening (244) is covered by means of a cover plate (230), and wherein said cover plate (230) serves as the seating surface (231) of said seat (1),
wherein, in the seat position, the seating surface (231) is oriented substantially horizontal,
wherein a swiveling angle of said suitcase shell (240) between said seat configuration (A) and said suitcase configuration (B) is in a range of from 70 to 100 degrees, preferably 90 degrees, and
wherein the removable passenger seat (1) is configured to be attached and detached from the airplane by hand and/or foot and is usable as carry-on piece of luggage.

2. The seat (1) according to claim 1, wherein said suitcase shell (240) is a rigid shell of a substantially cuboidal shape.

3. The seat (1) according to any one of the preceding claims, wherein a volume of the suitcase shell (240) is at least 0.01 cubic meters and is preferably selected from a range of from 0.01 cubic meters to 0.1 cubic meters, preferably 0.025 cubic meters to 0.075 cubic meters.

4. The seat (1) according to any one of the preceding claims,
wherein said suitcase shell (240) is a single piece element.

5. The seat (1) according to any one of the preceding claims, wherein an axis of rotation of said suitcase shell (240) extends substantially centrally through said suitcase shell (240).

6. The seat (1) according to any one of the preceding claims, wherein said backrest (300) comprises two or more sections (301, 304) that are attached to one another in a swiveling manner.

7. The seat (1) according to any one of the preceding claims, wherein said seat (1) is configured such that said suitcase shell (240) is releasably lockable in said seat position and in said suitcase position, wherein said seat (1) further comprises an interlocking handle (280) for releasing said suitcase shell (240);
wherein said interlocking handle is preferably integrated into a back wall (245) of said suitcase shell (240); and/or
wherein said seat (1) preferably comprises a securing element (298) which is arranged and configured such that said interlocking handle (280) is ineffective or blocked if said backrest (300) is in an extended position.

8. The seat (1) according to any one of the preceding claims, wherein said seat (1) comprises armrests (340), said armrests (340) being preferably attached to said seat frame (200) in a hinged manner.

9. The seat (1) according to any one of the preceding claims, that further comprises a telescopic handle (297), said telescopic handle being preferably attached to a bottom plate (245) of said suitcase shell (240), said bottom plate (245) being arranged opposite said cover plate (230).

10. The seat (1) according to any one of the preceding claims, wherein said seat frame comprises front legs (201) and back legs (203), wherein wheels (361) are attached to said back legs (203) such that said seat (1) in said suitcase configuration (B) is a wheeled suitcase.

11. The seat (1) according to any one of the preceding claims, wherein a moveable latch (351) is arranged at or in each front leg (201) for attaching said seat to a floor section of an airplane;
wherein said latch (351) is preferably extendable from a retracted position such as to protrude downward beyond said respective front leg (201); and/or
wherein said seat frame (200) preferably comprises a foot traverse (220) that connects said front legs (201) and that accommodates an actuation element (221), wherein, upon operation of said actuation element (221), said latches (351) are extended.

12. The seat (1) according to any one of the preceding claims, wherein said collapsible backrest (300) is attached to said suitcase shell (240), preferably in a hinged manner, wherein said backrest (300) is collapsible onto said suitcase shell (240).

13. A seating system (10) comprising a seat (1) according to any one of the claims 1 to 12 and an adaptor plate (100) for integration into an airplane, the adaptor plate (100) comprising:
at least one, preferably two, wheel retainer (150) for retaining a wheel (361) of a seat (1), wherein the wheel retainer (150) preferably comprises a hook-like wheel retainer element (152) for accommodating the wheel (361), wherein, preferably, said wheel retainer element (152) can be rotated from a collapsed position, in which the wheel retainer element (152) is received in a wheel retainer element recess (151) such that a top surface of the adapter plate (100) is substantially planar and continuous, into an extended position, in which said wheel retainer element (152) may receive and accommodate said wheel (361) whilst securing said seat (1), the securing being in particular with regard to forces acting perpendicularly to said top surface of the adaptor plate (100); and
at least one latch slot (104) for insertion and locking of latch (351) attached to said seat (1).

14. The seating system (10) according to claim 13, wherein the adaptor plate (100) comprises two wheel retainer elements (152) that can be rotated between the extended and the collapsed position, and opposing two latch slots (104), wherein a locking mechanism (130) is associated with each latch slot (104), wherein the adaptor plate (100) preferably further comprises a central locking system (140) by means of which the locking mechanism (130) and/or the wheel retainer elements (152) may be locked one or both collapsed and extended positions.

## Patentansprüche

1. Entfernbarer Passagiersitz (1) für ein Flugzeug umfassend:
eine Kofferschale (240) zum Verstauen von Gepäck; und
eine zusammenklappbare Rückenlehne (300);
wobei der Sitz (1) weiter einen Sitzrahmen (200) umfasst, wobei die Kofferschale (240) in dem Sitzrahmen (200) angeordnet ist, wobei die Kofferschale (240) schwenkbar angeordnet ist, so dass der Sitz (1) durch Zusammenklappen der Rückenlehne (300) und durch Schwenken der Kofferschale (240) aus einer Sitzposition in eine Kofferposition von einer Sitzkonfiguration (A) in eine Kofferkonfiguration (B) und zurück umgewandelt werden kann, und
wobei die Kofferschale (240) eine Zugangsöffnung (244) umfasst, wobei die Zugangsöffnung (244) mittels einer Abdeckplatte (230) abgedeckt ist, und
wobei die Abdeckplatte (230) als die Sitzfläche (231) des Sitzes (1) dient,
wobei in der Sitzposition die Sitzfläche (231) im Wesentlichen horizontal ausgerichtet ist,
wobei ein Schwenkwinkel der Kofferschale (240) zwischen der Sitzkonfiguration (A) und der Kofferkonfiguration (B) in einem Bereich von 70 bis 100 Grad, vorzugsweise 90 Grad, liegt, und
wobei der entfernbare Passagiersitz (1) derart ausgebildet ist, dass er von Hand und/oder mit dem Fuss an dem Flugzeug befestigt und von diesem gelöst werden kann und als Handgepäckstück verwendbar ist.

2. Sitz (1) nach Anspruch 1, wobei die Kofferschale (240) eine starre Schale von im Wesentlichen quaderförmiger Gestalt ist.

3. Sitz (1) nach einem der vorhergehenden Ansprüche, wobei ein Volumen der Kofferschale (240) mindestens 0.01 Kubikmeter beträgt und vorzugsweise aus einem Bereich von 0.01 Kubikmetern bis 0.1 Kubikmetern, vorzugsweise 0.025 Kubikmeter bis 0.075 Kubikmeter, ausgewählt ist.

4. Sitz (1) nach einem der vorhergehenden Ansprüche,
wobei die Kofferschale (240) ein einteiliges Element ist.

5. Sitz (1) nach einem der vorhergehenden Ansprüche, wobei sich eine Drehachse der Kofferschale (240) im Wesentlichen mittig durch die Kofferschale (240) erstreckt.

6. Sitz (1) nach einem der vorhergehenden Ansprüche, wobei die Rückenlehne (300) zwei oder mehr Abschnitte (301, 304) aufweist, die schwenkbar aneinander befestigt sind.

7. Sitz (1) nach einem der vorhergehenden Ansprüche, wobei der Sitz (1) derart ausgebildet ist, dass die Kofferschale (240) in der Sitzposition und in der Kofferposition lösbar verriegelbar ist, wobei der Sitz (1) weiter einen Verriegelungsgriff (280) zum Lösen der Kofferschale (240) aufweist;
wobei der Verriegelungsgriff vorzugsweise in eine Rückwand (245) der Kofferschale (240) integriert ist; und/oder
wobei der Sitz (1) vorzugsweise ein Sicherungselement (298) umfasst, das so angeordnet und ausgebildet ist, dass der Verriegelungsgriff (280) unwirksam oder blockiert ist, wenn sich die Rückenlehne (300) in einer ausgefahrenen Position befindet.

8. Sitz (1) nach einem der vorhergehenden Ansprüche, wobei der Sitz (1) Armlehnen (340) umfasst, wobei die Armlehnen (340) vorzugsweise an dem Sitzrahmen (200) in einer schwenkbaren Weise befestigt sind.

9. Sitz (1) nach einem der vorhergehenden Ansprüche, der weiter einen Teleskopgriff (297) umfasst, wobei der Teleskopgriff vorzugsweise an einer Bodenplatte (245) der Kofferschale (240) befestigt ist, wobei die Bodenplatte (245) gegenüber der Abdeckplatte (230) angeordnet ist.

10. Sitz (1) nach einem der vorhergehenden Ansprüche, wobei der Sitzrahmen Vorderbeine (201) und Hinterbeine (203) aufweist, wobei an den Hinterbeinen (203) Räder (361) derart befestigt sind, dass der Sitz (1) in der Kofferkonfiguration (B) ein Koffer mit Rädern ist.

11. Sitz (1) nach einem der vorhergehenden Ansprüche, wobei ein beweglicher Riegel (351) an oder in jedem Vorderbein (201) angeordnet ist, um den Sitz an einem Bodenabschnitt eines Flugzeugs zu befestigen;
wobei der Riegel (351) vorzugsweise aus einer zurückgezogenen Position so ausfahrbar ist, dass er nach unten über das jeweilige Vorderbein (201) hinaus vorsteht; und/oder
wobei der Sitzrahmen (200) vorzugsweise eine Fusstraverse (220) aufweist, die die Vorderbeine (201) verbindet und die ein Betätigungselement (221) aufnimmt, wobei bei Betätigung des Betätigungselements (221) die Riegel (351) ausgefahren werden.

12. Sitz (1) nach einem der vorhergehenden Ansprüche, wobei die zusammenklappbare Rückenlehne (300) an der Kofferschale (240) befestigt ist, vorzugsweise in einer klappbaren Weise, wobei die Rückenlehne (300) auf die Kofferschale (240) klappbar ist.

13. Sitzsystem (10) umfassend einen Sitz (1) nach einem der Ansprüche 1 bis 12 und einer Adapterplatte (100) zur Integration in ein Flugzeug, wobei die Adapterplatte (100) umfasst:
mindestens einen, vorzugsweise zwei, Radhalter (150) zum Halten eines Rades (361) eines Sitzes (1), wobei der Radhalter (150) vorzugsweise ein hakenähnliches Radhalteelement (152) zur Aufnahme des Rades (361) aufweist, wobei das Radhalteelement (152) vorzugsweise aus einer zusammengeklappten Position, in der das Radhalteelement (152) in einer Radhalteelementausnehmung (151) so aufgenommen ist, dass eine obere Fläche der Adapterplatte (100) im Wesentlichen eben und durchgehend ist, in eine ausgefahrene Position, in der das Radhalteelement (152) das Rad (361) erhalten und aufnehmen kann während es den Sitz (1) sichert, gedreht werden kann, wobei die Sicherung insbesondere in Bezug auf senkrecht zu der oberen Fläche der Adapterplatte (100) wirkende Kräfte erfolgt; und
mindestens einen Verriegelungsschlitz (104) zum Einführen und Verriegeln des an dem Sitz (1) angebrachten Riegels (351).

14. Sitzsystem (10) nach Anspruch 13, wobei die Adapterplatte (100) zwei Radrückhalteelemente (152) aufweist, die zwischen der ausgefahrenen und der zusammengeklappten Position gedreht werden können und die zwei Verriegelungsschlitzen (104) gegenüberliegen, wobei jedem Verriegelungsschlitz (104) ein Verriegelungsmechanismus (130) zugeordnet ist, wobei die Adapterplatte (100) vorzugsweise weiter ein zentrales Verriegelungssystem (140) aufweist, mit dem der Verriegelungsmechanismus (130) und/oder die Radrückhalteelemente (152) in einer oder beiden zusammengeklappten und ausgefahrenen Positionen verriegelt werden können.

## Revendications

1. Un siège passager amovible (1) pour un avion comprenant:
une coque à valise (240) pour ranger un valise; et
un dossier pliable (300);
dans lequel le siège (1) comprend en outre un cadre de siège (200), dans lequel ladite coque à valise (240) est disposée dans ledit cadre de siège (200); dans lequel ladite coque à valise (240) est disposée de manière pivotante de telle sorte que ledit siège (1) peut être converti d'une configuration de siège (A) en une configuration de valise (B) et de retour en repliant ledit dossier (300) et en faisant pivoter ladite coque à valise (240) d'une position de siège à une position de valise, et
dans lequel ladite coque à valise (240) comprend une ouverture d'accès (244),
dans lequel ladite ouverture d'accès (244) est recouverte au moyen d'une plaque de recouvrement (230); et
dans lequel ladite plaque de recouvrement (230) sert de surface d'assise (231) dudit siège (1),
dans lequel, dans la position de siège, la surface d'assise (231) est orientée sensiblement horizontalement,
dans lequel un angle de pivotement de ladite coque à valise (240) entre ladite configuration de siège (A) et ladite configuration de valise (B) est dans une plage de 70 à 100 degrés, de préférence 90 degrés, et
dans lequel le siège passager amovible (1) est configuré pour être fixé et détaché de l'avion à la main et/ou par pied et est utilisable en tant que bagage à main.

2. Le siège (1) selon la revendication 1, dans lequel ladite coque à valise (240) est une coque rigide de forme sensiblement cuboïdale.

3. Le siège (1) selon l'une quelconque des revendications précédentes, dans lequel un volume de la coque à valise (240) est d'au moins 0,01 mètre cube et est de préférence choisi dans une plage de 0,01 mètre cube à 0,1 mètre cube, de préférence 0,025 mètre cube à mètres à 0,075 mètre cube.

4. Le siège (1) selon l'une quelconque des revendications précédentes, dans lequel ladite coque à valise (240) est de préférence un élément monobloc.

5. Le siège (1) selon l'une quelconque des revendications précédentes, dans lequel un axe de rotation de ladite coque à valise (240) s'étend sensiblement au centre à travers ladite coque à valise (240).

6. Le siège (1) selon l'une quelconque des revendications précédentes, dans lequel ledit dossier (300) comprend deux sections ou plus (301, 304) qui sont fixées l'une à l'autre de manière pivotante.

7. Le siège (1) selon l'une quelconque des revendications précédentes, dans lequel ledit siège (1) est configuré de telle sorte que ladite coque à valise (240) est verrouillable de manière libérable dans ladite position de siège et dans ladite position de valise, dans lequel ledit siège (1) en outre comprend une poignée de verrouillage (280) pour libérer ladite coque à valise (240);
dans lequel ladite poignée de verrouillage est de préférence intégrée dans une paroi arrière (245) de ladite coque à valise (240); et / ou
dans lequel ledit siège (1) comprend de préférence un élément de fixation (298) qui est agencé et configuré de telle sorte que ladite poignée de verrouillage (280) est inefficace ou bloquée si ledit dossier (300) est dans une position étendue.

8. Le siège (1) selon l'une quelconque des revendications précédentes, dans lequel ledit siège (1) comprend des accoudoirs (340), lesdits accoudoirs (340) étant de préférence fixés audit cadre de siège (200) d'une manière articulée.

9. Le siège (1) selon l'une quelconque des revendications précédentes, qui comprend en outre une poignée télescopique (297), ladite poignée télescopique étant de préférence fixée à une plaque inférieure (245) de ladite coque à valise (240), ladite plaque inférieure (245) étant disposée à l'opposé de ladite plaque de recouvrement (230).

10. Le siège (1) selon l'une quelconque des revendications précédentes, dans lequel ledit cadre de siège comprend des pieds avant (201) et des pieds arrière (203), dans lequel des roues (361) sont fixées auxdits pieds arrière (203) de telle sorte que ledit siège (1), dans ladite configuration de valise (B), est une valise à roulettes.

11. Le siège (1) selon l'une quelconque des revendications précédentes, dans lequel un verrou mobile (351) est agencé au niveau ou dans chaque jambe avant (201) pour fixer ledit siège à une section de plancher (100) d'un avion;
dans lequel ledit verrou (351) est de préférence extensible à partir d'une position rétractée de manière à faire saillie vers le bas au-delà de ladite jambe avant respective (201); et / ou dans lequel ledit cadre de siège (200) comprend de préférence une traverse de pied (220) qui relie lesdits pieds avant (201) et qui reçoit un élément d'actionnement (221), dans lequel, lors du fonctionnement dudit élément d'actionnement (221), lesdits verrous (351) sont étendus.

12. Le siège (1) selon l'une quelconque des revendications précédentes, dans lequel ledit dossier pliable (300) est fixé à ladite coque à valise (240), de préférence de manière articulée, dans lequel ledit dossier (300) est rabattable sur ladite coque à valise (240).

13. Un système de siège (10) comprenant un siège (1) selon l'une quelconque des revendications 1 à 12 et une plaque d'adaptation (100) pour l'intégration dans un avion, la plaque d'adaptation (100) comprenant:
au moins un, de préférence deux, dispositifs de retenue de roue (150) pour retenir une roue (361) d'un siège (1), dans lequel le dispositif de retenue de roue (150) comprend de préférence un élément de retenue de roue en forme de crochet (152) pour recevoir la roue (361), dans lequel, de préférence, ledit élément de retenue de roue (152) peut être tourné à partir d'une position repliée, dans laquelle l'élément de retenue de roue (152) est reçu dans un évidement d'élément de retenue de roue (151) de telle sorte qu'une surface supérieure de la plaque d'adaptation (100) est sensiblement plane et continue, dans une position étendue, dans laquelle ledit élément de retenue de roue (152) peut recevoir et loger ladite roue (361) tout en fixant ledit siège (1), la fixation étant en particulier vis-à-vis des forces agissant perpendiculairement à ladite surface supérieure de la plaque d'adaptation (100); et au moins une fente de verrou (104) pour l'insertion et le verrouillage du verrou (351) fixé audit siège (1).

14. Le système de siège (10) selon la revendication 13, dans lequel la plaque d'adaptation (100) comprend deux éléments de retenue de roue (152) qui peuvent être tournés entre la position étendue et la position repliée, et opposées à deux fentes de verrouillage (104), dans lequel un mécanisme de verrouillage (130) est associé à chaque fente de verrouillage (104), dans lequel la plaque d'adaptation (100) comprend en outre de préférence un système de verrouillage central (140) au moyen duquel le mécanisme de verrouillage (130) et / ou les éléments de retenue de roue (152) peuvent être verrouillées dans une ou les deux positions repliée et étendue.
